# EUROPEAN PATENT APPLICATION

(11) **EP 3 192 676 A1**
(43) Date of publication of application: **19.07.2017**
(21) Application number: 16795217.5
(22) Date of filing: 18.01.2016
(51) Int. Cl.: B60C 23/04

(54) **TYRE PRESSURE GAUGE**

(30) Priority: 12.10.2015 CN 201510658554
(71) Applicant: Steelmate Co., Ltd., Zhongshan, Guangdong 528425 (CN)
(72) Inventor: LI, Anpei, Zhongshan Guangdong 528425 (CN); SU, Zhiqiang, Zhongshan Guangdong 528425 (CN)
(74) Representative: Gulde & Partner
(86) International application number: PCT/CN2016/071192
(87) International publication number: WO 2017/063314

(57) **Abstract**

A tire pressure gauge, includes: an enclosure with an intake hole, a gas nozzle assembly connected with the enclosure, and an internal thread nut member, the gas nozzle assembly comprising a stem, a first threaded bolt, a second threaded bolt, and a nut screwed onto the first threaded bolt, the internal thread nut member comprising an insertion portion and a limiting portion, a stepped hole being defined in the enclosure, extending through a top portion and bottom portion of the enclosure, and engaging the internal thread nut member, the insertion portion of the internal thread nut member being inserted into the stepped hole and connected with the second threaded bolt of the gas nozzle assembly, and the limiting portion of the internal thread nut member being pressed against the enclosure.

## Description

### FIELD OF THE INVENTION

The present invention involves field of tire pressure sensing and more particularly, involves a tire pressure gauge.

### BACKGROUND OF THE INVENTION

At present, increased attention has been paid to safe driving. In this sense, some practical driving assistant devices such as tire pressure gauges have gotten wide acceptance and applications.

A prior art motorcycle tire pressure gauge includes an enclosure constructed of an upper casing and a lower casing joined together, a circuit board disposed inside the enclosure, a battery, a pressure sensor, a internal thread nut member, and a gas nozzle assembly. The gas nozzle assembly includes a stem, a threaded bolt integrally formed with the stem and engaging the internal thread nut member, and a cylindrical compression spring sleeved on the internal thread nut member and resiliently disposed between the enclosure and gas nozzle. A stepped hole is defined in the enclosure and passes through the upper and lower casings. An intake hole is defined in the lower casing for gas inside the tire to flow into the tire pressure gauge, thereby being gas pressure inside the tire being sensed by the pressure sensor. The internal thread nut member travels from the top portion of the upper casing, through the stepped hole, and then is connected with the threaded bolt. The circuit board and battery are placed at two lateral sides of the internal thread nut member, and mechanical and electrical connection between the circuit board and battery is realized by two metal tabs.

During assembly of the motorcycle tire pressure gauge, the internal thread nut member and stem are disposed at two sides of a wheel hub (in this case, the threaded bolt of the gas nozzle passes a gas nozzle mounting hole in the hub and then is connected with the internal thread nut member). Next, the cylindrical compression spring is sandwiched between the enclosure and hub to prevent loosing of the gas nozzle assembly with respect to the enclosure and separation between the stem and enclosure when running on uneven road.

This kind of motorcycle tire pressure gauge is capable of detecting internal pressure of the motorcycle tire in real time, transforming the pressure into electrical signals, and then transmitting the same to other devices (such as a displaying device built in the handlebar to display the same), hence the driver being aware of current pressure condition of the tire and ensuring safe driving.

However, there is no limiting structure between the internal thread nut member and enclosure, and accordingly, the enclosure possibly will rotate inside the tire and location of the enclosure will be changed. As a result, the enclosure possibly will collide with the hub and wear of the enclosure will be resulted. This disadvantageously accommodates variety of wheel hub section shapes.

### SUMMARY OF THE INVENTION

The present invention provides a tire pressure gauge of which an enclosure is adjustably mounted in a wheel hub, thus advantageously accommodating a variety of wheel hubs with different section shapes.

To realize the above object, the following solution is proposed.

A tire pressure gauge includes an enclosure with an intake hole, a gas nozzle assembly connected with the enclosure, and an internal thread nut member, the gas nozzle assembly comprising a stem, a first threaded bolt, a second threaded bolt, and a nut screwed onto the first threaded bolt, the internal thread nut member comprising an insertion portion and a limiting portion, a stepped hole being defined in the enclosure, extending through a top portion and bottom portion of the enclosure, and engaging the internal thread nut member, the insertion portion of the internal thread nut member being inserted into the stepped hole and connected with the second threaded bolt of the gas nozzle assembly, and the limiting portion of the internal thread nut member being pressed against the enclosure.

Compared with prior art, the present invention brings the following good effects:

The gas nozzle stem is secured onto the wheel hub by engagement of the nut and first threaded bolt; connection between the enclosure and stem is achieved by engagement of the internal thread nut member and the second threaded bolt, and a stepped hole defined in the enclosure and engaging the nut member; and by securing the tire pressure gauge with the wheel hub at multiple locations (for example, at locations where the hub is connected to the stem, and stem is connected to the enclosure), strong connection is realized between the tire pressure gauge and the wheel hub, and this connection will less be subject to impact of centrifugal force generated by rotation of the tire.

The tire pressure gauge further includes a locating member. The enclosure includes an upper casing and a lower casing secured with the upper casing; the locating member comprises a locating bushing for receiving the nut and a covering for receiving the locating bushing; groove is defined in one end of the locating bushing and conforms to an external contour of the nut, while the other end thereof is provided with a plurality of external teeth at its periphery; the covering has a plurality of internal teeth meshed with the external teeth of the locating bushing; and corresponding to the stepped hole, the covering is formed on the lower casing. The location of the enclosure inside the hub is adjustable due to the locating member and therefore, the enclosure will not rotate relative to the stem during rotation of the tire.

Preferably, the tire pressure gauge further includes a cone spring resiliently disposed between the locating bushing and covering. One end of the cone spring is larger than the other end and is pressed against the lower casing, while the other end is pressed against the locating bushing.

Preferably, a PCB assembly and a battery for powering the PCB assembly are contained inside the enclosure; the PCB assembly comprises a circuit board, a pressure sensor, a control circuit and an antenna all of which are built into the circuit board and electrically connected with each other; the battery is disposed at one side of the circuit board along a longitudinal direction of the board; the pressure sensor, control circuit and antenna are all disposed at one side of the circuit board adjacent to the battery; the other side of the circuit board is provided with a locating hole; and the stepped hole is defined at a location corresponding to the locating hole.

The tire pressure gauge further includes a conductive ring disposed between the upper casing and internal thread nut member and having a threaded post. A receiving groove for receiving the ring is defined in the upper casing; the conductive ring is received into the receiving groove to construct the stepped hole; a through hole through which the post passes is defined in the upper casing at a location corresponding to the post; the antenna is formed as a welding pad located on the circuit board; and the circuit board is connected with the post with a screw which passes through the welding pad of the antenna and then is connected with the post.

### BRIEF DESCRIPTION OF THE DRAWINGS

Figure 1 illustrates a perspective view of a tire pressure gauge according to one embodiment of the invention;
Figure 2 denotes an exploded view of the tire pressure gauge of figure 1;
Figure 3 shows another exploded view of the tire pressure gauge of figure 1; and
Figure 4 denotes a partial cross-sectional view of the tire pressure gauge of figure 1.

### DETAILED DESCRIPTION OF THE INVENTION

Various embodiments of the invention are described below in greater details with reference to the drawings.

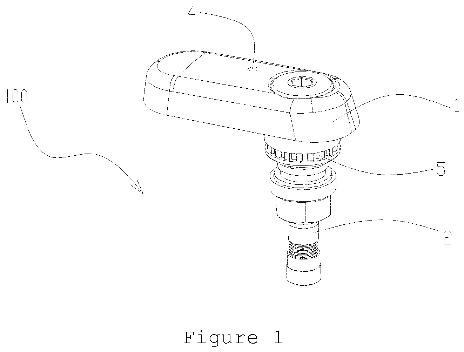

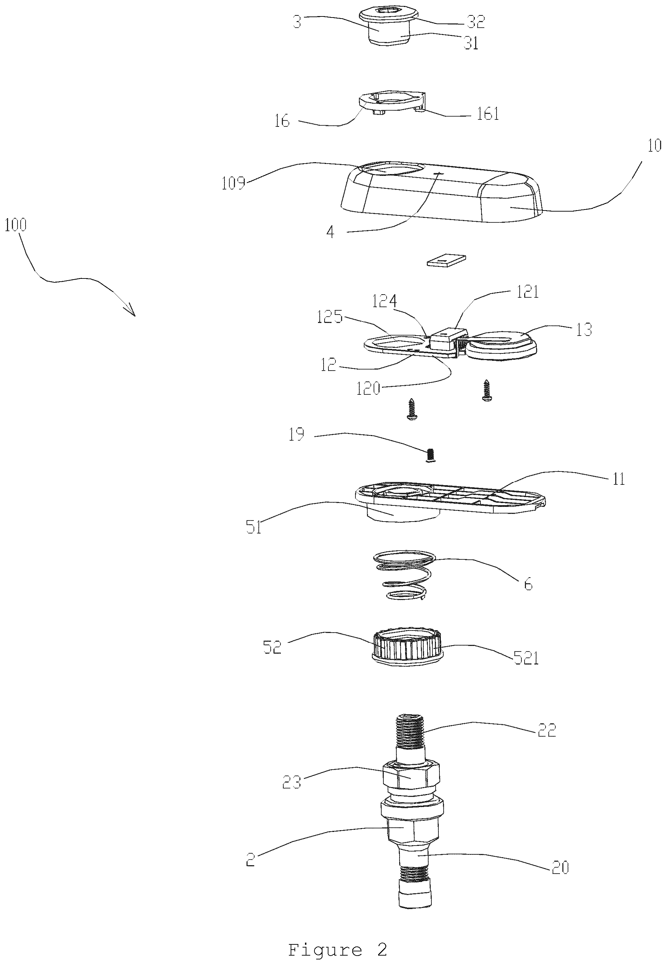

Figures 1-4 show a tire pressure gauge 100 according to an embodiment of the invention. The gauge 100 is installed on a motorcycle wheel hub for real time monitoring gas pressure inside the tire and thus ensuring safe driving. The tire pressure gauge 100 includes an enclosure 1, a gas nozzle assembly 2, and a internal thread nut member 3.

The enclosure 1 includes an upper casing 10 and a lower casing 11 joined with the upper casing. An intake hole 4 is defined in the upper casing 10. Inside the enclosure 1, A PCB assembly 12 and a battery 13 are disposed. The PCB assembly 12 works to detect gas pressure coming into the enclosure 10 through the intake hole 4, transform the pressure signal into electrical signals and transmit the same outside. The battery 13 is for supplying power to the PCB assembly 12.

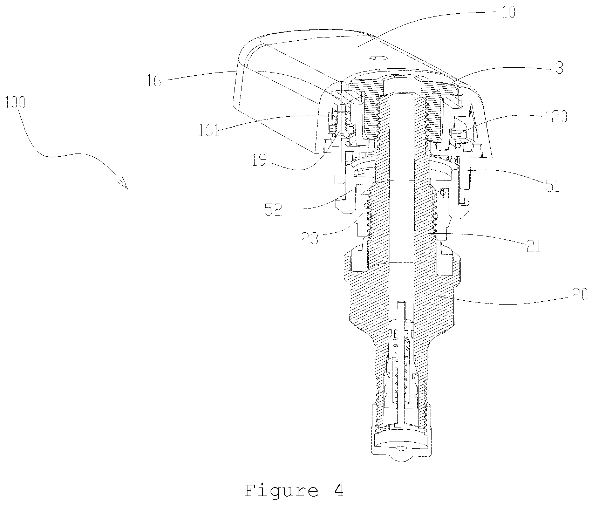

The gas nozzle assembly 2 includes a stem 20, a first threaded bolt 21 disposed at one end, which is away from an intake opening, of the stem 20 (See figure 4), a second threaded bolt 22 coupled with the first threaded bolt 21, and a nut 23 for engaging the first threaded bolt 21 to secure the stem 20 and wheel hub together (the nut may be a hexagon nut).

The internal thread nut member 3 is stepped and includes an insertion portion 31 and a limiting portion 32 formed on one end of the insertion portion 31. An internal thread 311 is formed in the insertion portion 31 for engaging the second threaded bolt 22. A hex socket, cross socket, or a slot (not shown) is defined in a center of the limiting portion 32, through which a corresponding tool may be used to drive the internal thread nut member 3, thus connecting the nut 3 to the second threaded bolt 22, and realizing connection between the enclosure 1 and stem 20.

A stepped hole 109 is defined in the enclosure 1 and passes through its top end (that is, the top end of the upper casing 10) and bottom end (that is, the bottom end of the lower casing 11) and then engages the internal thread nut member 3. Moreover, a locating hole 125 is defined in the PCB assembly 12 of the enclosure 1 at a location corresponding to the stepped hole 109, thereby the insertion portion 31 of the internal thread nut member 3 being able to pass through the stepped hole 109 and locating hole 125, while the limiting portion 32 being barred to pass through the stepped hole 109.

The insertion portion 31 of the internal thread nut member 3 goes through the stepped hole 109 of the enclosure 1 and then is connected with the second threaded bolt 22 of the gas nozzle assembly 2. The limiting portion 32 of the internal thread nut member 3 is pressed against the upper casing 10, thus securing the enclosure 1 and gas nozzle assembly 2 together.

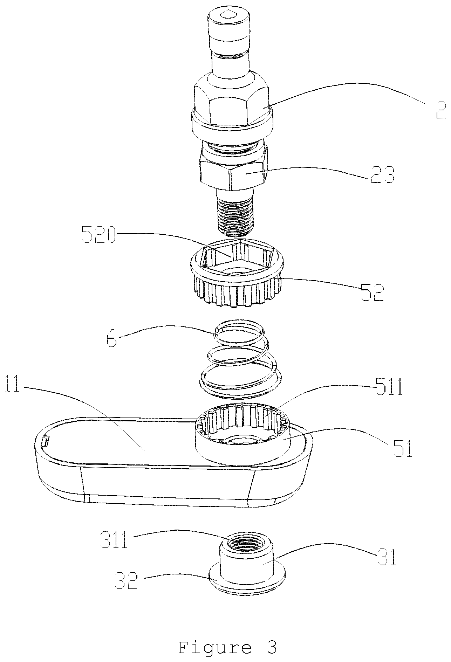

Furthermore, to realize location adjustment of the enclosure 1 relative to the wheel hub, a locating member 5 disposed between the enclosure 1 and stem 20 is provided. The locating member 5 includes a locating bushing 52 into which the nut 23 is inserted, and a covering 51 formed on the lower casing 11 of the enclosure 1 and corresponding to the stepped hole 109. A groove 520 conforming to the external contour of the nut 23 is defined at one end of the locating bushing 52, and an external tooth 521 is defined on a periphery of the other end of the bushing 52. An internal tooth 511 meshed with the external tooth 521 is formed inside the covering 51 (See figure 3). In assembly, the locating bushing 52 is fitted into the covering 51, and the internal tooth 511 meshes with the external tooth 521 of the locating bushing 52. Due to meshing of the teeth 511 and 521, after the covering 51 is assembled onto the locating bushing 52, the relative location of the two components will not be changed by an external force, thereby making it possible to constantly secure the enclosure 1 into the wheel hub at a fixed location.

The mounting location of the enclosure 1 is adjusted as follow: disconnect the covering 51 from the locating bushing 52 (separate the internal tooth from the external tooth), next rotate the enclosure 1 to a desired angle, fit the locating bushing 52 into the covering 51, and finally screw the second threaded bolt 22 into the internal thread nut member 3. Obviously, the enclosure 1 is adjustable inside the wheel hub.

Further, the tire pressure gauge 100 further includes a cone spring 6 resiliently disposed between the covering 51 and locating bushing 52. A one end of the cone spring 6 is larger than the other end and is pressed against the lower casing 11, while the other end is pressed against the locating bushing 52. Existence of the cone spring 6 between the covering 51 and locating bushing 52 avoids loosing and separation between the gas nozzle assembly 2 and enclosure 1 during use of the gauge 100 on uneven road or long time use. In addition, as a bigger end of the cone spring 6 is pressed against the enclosure 1, while the other end is against the locating bushing 52, thus the centrifugal force imposed on the enclosure during rotation of the tire being readily transferred to the locating bushing 52 and to the wheel hub, and thus getting balanced force transfer.

In particular, the PCB assembly 12 includes a circuit board 120, a pressure sensor 121, a control circuit and an antenna (not labeled) all of which are built into the circuit board 120 and connected with each other. The control circuit transmits the pressure signal detected by the pressure sensor 121 to the antenna and then the antenna radiates the signal out of the hub. Preferably, one end of the antenna is a welding pad located on the circuit board.

Furthermore, the tire pressure gauge 100 also includes a conductive ring 16 located between the internal thread nut member 3 and upper casing 10. A receiving groove (not labeled) for receiving the ring 16 is defined in the upper casing 10. The stepped hole 109 is defined by inserting the conductive ring 16 into the receiving groove. When assembling the enclosure 1 and gas nozzle assembly 2, the insertion portion 31 of the internal thread nut member 3 passes through an aperture of the conductive ring 16 and the limiting portion of the member 3 contacts the ring 16. A threaded post 161 is formed on the ring 16. A through hole (as shown in figure 4) through which the post 16 passes is defined in the upper casing 10 at a location corresponding to the post 161. The circuit board 120 is connected with the post 161 with a screw 19 which passes through the welding pad 124 of the antenna and then is connected with the post 161. By this way, the welding pad 124 of the antenna is pressed against the post 161, thus being electrically connected with the conductive ring 16, nut member 3, second threaded bolt 22, and gas nozzle stem 20. As a result, the pressure signals are transmitted to the stem via the antenna, ring, and post, and are radiated out from the stem. As all of the conductive ring, internal thread nut member and gas nozzle are made of metal, good conductivity is maintained, and accordingly, the pressure signals are transmitted with high quality and longer distance.

Moreover, the battery 13 is disposed at one side of the circuit board 120 along a longitudinal direction of the board 120 and is communicated with the circuit or element on the circuit board 120 through a pair of battery tabs (not labeled) . The pressure sensor 121, control circuit and antenna are all disposed at one side of the circuit board 120 adjacent to the battery 13 such that a free region is defined at the other side of the board 120 away from the battery 13. The locating hole 125 is defined in the free region.

An embossment (not shown) is formed on the upper casing at a location corresponding to the locating hole 125. The embossment constitutes part of the stepped hole 109, and the circuit board 120 is secured onto the embossment by insertion of the embossment into the locating hole 125.

As the locating hole 125 is defined in the free region, where no electric components is provided, on the circuit board 120, the hole 125 occupies little space of the circuit board 120, thus reducing size of the enclosure along a longitudinal direction, and further reducing the entire size of the tire pressure gauge 100.

Also, the lower casing 11 and upper casing 10 are joined together by bayonet connection. Specifically, an engaging opening corresponding to the outer contour of the lower casing is defined in the upper casing, and the lower casing is held in the opening. An engaging head is provided on the embossment at a location close to the lower casing, an engaging slot is defined in the lower casing at a location corresponding to the engaging head. When the lower casing is held by the engaging opening of the upper casing, the engaging head extends into the engaging slot and holds the lower casing in place.

Though various embodiments of the invention have been illustrated above, a person of ordinary skill in the art will understand that, variations and improvements made upon the illustrative embodiments fall within the scope of the invention, and the scope of the invention is only limited by the accompanying claims and their equivalents.

## Claims

1. A tire pressure gauge, comprising an enclosure with an intake hole, a gas nozzle assembly connected with the enclosure, and an internal thread nut member, the gas nozzle assembly comprising a stem, a first threaded bolt, a second threaded bolt, and a nut screwed onto the first threaded bolt, the internal thread nut member comprising an insertion portion and a limiting portion, a stepped hole being defined in the enclosure, extending through a top portion and bottom portion of the enclosure, and engaging the internal thread nut member, the insertion portion of the internal thread nut member being inserted into the stepped hole and connected with the second threaded bolt of the gas nozzle assembly, and the limiting portion of the internal thread nut member being pressed against the enclosure.

2. The tire pressure gauge as recited in claim 1, further comprising a locating member, wherein the enclosure comprises an upper casing and a lower casing secured with the upper casing; the locating member comprises a locating bushing for receiving the nut and a covering for receiving the locating bushing; groove is defined in one end of the locating bushing and conforms to an external contour of the nut, while the other end thereof is provided with a plurality of external teeth at its periphery; the covering has a plurality of internal teeth meshed with the external teeth of the locating bushing; and corresponding to the stepped hole, the covering is formed on the lower casing.

3. The tire pressure gauge as recited in claim 2, further comprising a cone spring resiliently disposed between the locating bushing and covering.

4. The tire pressure gauge as recited in claim 2, wherein a PCB assembly and a battery for powering the PCB assembly are contained inside the enclosure; the PCB assembly comprises a circuit board, a pressure sensor, a control circuit and an antenna all of which are built into the circuit board and electrically connected with each other; the battery is disposed at one side of the circuit board along a longitudinal direction of the board; the pressure sensor, control circuit and antenna are all disposed at one side of the circuit board adjacent to the battery; the other side of the circuit board is provided with a locating hole; and the stepped hole is defined at a location corresponding to the locating hole.

5. The tire pressure gauge as recited in claim 4, further comprising a conductive ring disposed between the upper casing and internal thread nut member and having a threaded post, wherein a receiving groove for receiving the ring is defined in the upper casing; the conductive ring is received into the receiving groove to construct the stepped hole; a through hole through which the post passes is defined in the upper casing at a location corresponding to the post; the antenna is formed as a welding pad located on the circuit board; and the circuit board is connected with the post with a screw which passes through the welding pad of the antenna and then is connected with the post.
